(19) Europäisches Patentamt / European Patent Office / Office européen des brevets

(11) **EP 4 364 606 A1**

(12) **EUROPEAN PATENT APPLICATION**
published in accordance with Art. 153(4) EPC

(43) Date of publication:
**08.05.2024 Bulletin 2024/19**

(21) Application number: **22832991.8**

(22) Date of filing: **23.06.2022**

(51) International Patent Classification (IPC):
**A44B 18/00** (2006.01)    **C08K 5/053** (2006.01)
**C08L 29/04** (2006.01)    **C08L 71/02** (2006.01)
**C08K 3/013** (2018.01)    **C08K 3/34** (2006.01)

(52) Cooperative Patent Classification (CPC):
**A44B 18/00; C08K 3/013; C08K 3/34; C08K 5/053;
C08L 29/04; C08L 71/02**

(86) International application number:
**PCT/JP2022/025031**

(87) International publication number:
**WO 2023/276844 (05.01.2023 Gazette 2023/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.06.2021 JP 2021108238**

(71) Applicants:
• **Kuraray Fastening Co., Ltd.
Osaka-shi, Osaka 530-8611 (JP)**
• **Kuraray Co., Ltd.
Kurashiki-shi, Okayama 710-0801 (JP)**

(72) Inventors:
• **KOGA, Nobuhiro
Kurashiki-shi, Okayama 713-8550 (JP)**
• **KAMADA, Hideki
Kurashiki-shi, Okayama 713-8550 (JP)**
• **TAKAKUWA, Kazunori
Sakai-shi, Fukui 910-0273 (JP)**
• **FUJISAWA, Yoshikatsu
Sakai-shi, Fukui 910-0273 (JP)**

(74) Representative: **Müller-Boré & Partner
Patentanwälte PartG mbB
Friedenheimer Brücke 21
80639 München (DE)**

(54) **HOT WATER-SOLUBLE MALE HOOK-AND-LOOP FASTENER AND METHOD FOR PRODUCING SAME**

(57)    A hot water-soluble male-type hook-and-loop fastener having a substrate and a plurality of male-type engaging elements protruding from the surface of the substrate, in which the substrate and the male-type engaging elements both contain a polyvinyl alcohol-based resin having a polymerization degree in a range of 300 to 700 and a saponification degree in a range of 80 to 99 mol%, and the substrate and the male-type engaging elements are both soluble in hot water at a water temperature of 45 to 90°C but are not soluble in water at a water temperature of lower than 45°C.

[Fig. 1]

EP 4 364 606 A1

**Description**

Technical Field

The present invention relates to a male-type hook-and-loop fastener having male-type engaging elements on the surface thereof and dissolving in hot water, and a method for producing the same. More specifically, the present invention relates to a hot water-soluble male-type hook-and-loop fastener that does not dissolve in water at room temperature but rapidly dissolves in hot water at a higher temperature so that the engaging force disappears and the shape and existence of the male-type hook-and-loop fastener also disappear, and a method for producing the same.

Background Art

Conventionally, as one of means for attaching an object to the surface of a material body, a method has been used in which a male-type hook-and-loop fastener having hook-shaped or mushroom-shaped male-type engaging elements is attached to one of the surfaces of the material body and the object, a loop-type hook-and-loop fastener having loop-shaped engaging elements is attached to the other surface, and the surfaces of the engaging elements on both hook-and-loop fasteners are superposed and both engaging elements are engaged to fix the object to the surface of the material body. This method is useful as an attachment means because attachment and detachment can be performed any number of times by repeating engagement and peeling, and when the attachment position is not accurate, the attachment position can be easily adjusted by peeling.

In recent years, such a hook-and-loop fastener has been used for fixing a sanitary product to an underwear or for fixing a disposable diaper to a waist portion, and such a sanitary product or a disposable diaper with a hook-and-loop fastener is currently discarded as a part of garbage as it is after use, and is finally incinerated.

If used disposable products such as sanitary products and disposable diapers can be flushed down the toilet in the same manner as used toilet paper, the labor for waste treatment and measures against offensive odors at each home will be extremely simple, and the labor and fuel required for recovering and incinerating wastes will be unnecessary. Therefore, sanitary products and disposable diapers that can be flushed down the toilet are required. Along with this, the hook-and-loop fastener constituting such sanitary products and disposable diapers is also required to be water-soluble at room temperature so that it dissolves quickly in toilet water and the engaging force disappears.

In general, the hook-and-loop fastener is composed of a combination of a male-type hook-and-loop fastener and a loop type hook-and-loop fastener as described above, and regarding the loop type hook-and-loop fastener, the problem of room-temperature water solubility can be easily solved by using a fabric in which room-temperature water-soluble fibers are present in a loop shape on the fabric surface, but regarding the other male-type hook-and-loop fastener, it is necessary to have hook-shaped engaging elements on the surfaces that maintain the hook-shaped shape against tensile force, and several proposals have been made regarding the room-temperature water-soluble male-type hook-and-loop fastener having such hook-shaped engaging elements.

For example, PTL 1 discloses that a water-soluble resin obtained by graft polymerization of polyoxyalkylene onto a copolymer of vinyl alcohol and allyl alcohol is used as a room-temperature water-soluble male-type hook-and-loop fastener that can be suitably used in disposable products that can be disposed of in a toilet or the like.

However, as a matter of course, the low-temperature water-soluble hook-and-loop fastener that is soluble in tap water as described in this document is easily dissolved during wearing by contact with a body liquid having a higher temperature than the water, so that it is dissolved during wearing before being thrown away in a toilet and the engaging force is lost, so that it cannot be actually used. For this reason, sanitary products and disposable diapers using water-soluble hook-and-loop fastener have not been industrialized at present.

Recently, as part of the solution of environmental problems, research has been conducted on an attempt to recover only disposable products such as used sanitary products and disposable diapers, mix them with hot water, pulverize them, separate them into various raw materials, wash and sterilize them, recover pulp, fibers, highly water-absorbing resins and films used for disposable products, and utilize them again for disposable products, instead of incinerating them as waste.

However, the hook-and-loop fastener used for such disposable products, in particular, the male-type hook-and-loop fastener, is difficult to be pulverized and difficult to be separated in a state of being attached to the disposable products, and therefore, when pulp, fibers, highly water-absorbing resins, and films are recovered and recycled, the presence of the male-type hook-and-loop fastener hinders the recovery and recycling. If the hook-and-loop fastener used can be easily removed from the raw materials in the steps of recovery, pulverization, separation, washing, sterilization, and the like, it is extremely easy to recover and recycle pulp, fibers, highly water-absorbing resins, and films.

Citation List

Patent Literature

PTL 1: JP 09-313218 A

Summary of Invention

Technical Problem

The present invention provides a male-type hook-and-loop fastener used for such disposable products, in which the male-type hook-and-loop fastener is not dissolved in water having a temperature similar to that of body fluids discharged from the human body, but is easily dissolved in water having a temperature similar to that of hot water used when used disposable products are recovered and used pulp, fibers, water-absorbing resins, films, and the like are separated and recovered, and does not interfere with the recovery of raw materials such as pulp, fibers, highly water-absorbing resins, films, and the like.

Preferably, the present invention provides a male-type hook-and-loop fastener which is such a hot water-soluble male-type hook-and-loop fastener and which can provide a high engaging force (hereinafter sometimes referred to as engagement strength). More preferably, an object of the present invention is to provide a hot water-soluble male-type hook-and-loop fastener (hereinafter sometimes referred to as a male-type molded hook-and-loop fastener) which has such a hot water solubility and a high engaging force, in which the male-type engaging elements are flexible, and in which the resins used for molding are suppressed from gelling or decomposing during molding, and as a result, the male-type engaging elements of the molded hook-and-loop fastener are not bent and the substrate layer of the hook-and-loop fastener is not cracked. Still more preferably, an object of the present invention is to provide a male-type hook-and-loop fastener having such a hot water solubility, a high engagement strength, and excellent moldability, and having a small-sized male-type engaging element having excellent skin touch feeling when worn.

Solution to Problem

That is, the present invention is a hot water-soluble male-type hook-and-loop fastener having a substrate and a plurality of male-type engaging elements protruding from the surface of the substrate, in which the substrate and the male-type engaging elements both contain a polyvinyl alcohol-based resin, and the substrate and the male-type engaging elements are both soluble in hot water at any temperature within the range of a water temperature of 45 to 90°C but are not soluble in water at a water temperature of lower than 45°C.

Preferably, in such a hot water-soluble male-type hook-and-loop fastener: the plurality of male-type engaging elements are arranged in a row, and each of the male-type engaging elements has a shape rising from the surface of the substrate, bending in the row direction from the middle thereof, and having a tip end portion facing a direction approaching the surface of the substrate, or a shape rising from the surface of the substrate, bending in the row direction by being divided into front and back in the row direction in the middle thereof, and having divided tip end portions facing a direction approaching the surface of the substrate; and both the substrate and the male-type engaging elements are made of the polyvinyl alcohol-based resin having a polymerization degree in a range of 300 to 700 and a saponification degree in a range of 80 to 99 mol%; and the substrate and the male-type engaging elements are made of a resin composition in which a polyhydric alcohol or an ethylene oxide-based polymer is added to the polyvinyl alcohol-based resin in an amount of 5 to 45 parts by mass with respect to 100 parts by mass of the polyvinyl alcohol-based resin; and the substrate and the male-type engaging elements are made of a resin composition in which layered inorganic particles are added to the polyvinyl alcohol-based resin in an amount of 4 to 25 parts by mass with respect to 100 parts by mass of the polyvinyl alcohol-based resin.

Preferably, in such a hot water-soluble male-type hook-and-loop fastener, the height from the surface of the substrate to the top portion of each of the male-type engaging elements is 1.2 mm or less when each of the male-type engaging elements has a shape rising from the surface of the substrate, bending in the row direction from the middle thereof, and having a tip end portion facing a direction approaching the surface of the substrate, and the height from the surface of the substrate to the top portion of each of the male-type engaging elements is 0.6 mm or less when each of the male-type engaging elements has a shape rising from the surface of the substrate, bending in the row direction by being divided into front and back in the row direction in the middle thereof, and having divided tip end portions facing a direction approaching the surface of the substrate.

Preferably, in such a hot water-soluble male-type hook-and-loop fastener, the polyhydric alcohol or the ethylene oxide-based polymer is polyethylene glycol, and has a number-average molecular weight in a range of 300 to 700, and the layered inorganic particles are talc.

Furthermore, the present invention is a combination of the above-mentioned hot water-soluble male-type hook-and-loop fastener and a hot water-soluble loop type hook-and-loop fastener composed of a loop fiber made of a polyvinyl alcohol resin that is soluble in hot water at a water temperature of 45 to 90°C but is not soluble in water at a water temperature of lower than 45°C, and preferably in such a combination, the hot water-soluble loop type hook-and-loop fastener is a nonwoven fabric or a woven or knitted fabric as a base fabric, and loop fibers are present on the surface thereof.

Then, the present invention is a method for producing a hot water-soluble male-type hook-and-loop fastener, including the steps of: pouring a molten material of a resin composition satisfying the following (1) and (2) onto the surface of a metal roll satisfying the following (A), press-fitting the molten material into a cavity in the shape of a male-type engaging element formed by perforating the surface of the metal roll, cooling and solidifying the molten material in this state, and then peeling the molten material from the surface of the metal roll and withdrawing the molten material from the cavity:

(A) the metal roll is formed by superposing ring-shaped dies in which a plurality of the cavities are engraved on the outer circumference, a plurality of the cavities are arranged in a row in the circumferential direction of the metal roll on the surface of the metal roll, and the cavities are bent in the row direction of the cavities in the middle and the tip end portions thereof approach the surface of the metal roll, or the cavities are bifurcated in the middle and bent in the row direction respectively and the tip end portions thereof approach the surface of the metal roll;

(1) the resin composition contains a polyvinyl alcohol-based resin, a polyhydric alcohol or an ethylene oxide-based polymer, and layered inorganic particles, in which a mixing ratio of the resin composition is such that the polyhydric alcohol or the ethylene oxide-based polymer is in a range of 5 to 45 parts by mass and the layered inorganic particles are in a range of 4 to 25 parts by mass with respect to 100 parts by mass of the polyvinyl alcohol-based resin;
(2) the polyvinyl alcohol has a polymerization degree of 300 to 700 and a saponification degree of 80 to 99 mol%.

Preferably, in such a method for producing a hot water-soluble male-type hook-and-loop fastener, when the cavity has a shape in which the cavity is bent in the row direction of the cavity in the middle and the tip end portion thereof is approaching the surface of the metal roll, the depth of the cavity from the surface of the metal roll is 1.2 mm or less at the deepest portion, or when the cavity has a shape in which the cavity is bifurcated and bent in the row direction in the middle and the tip end portions thereof are approaching the surface of the metal roll, the depth of the cavity from the surface of the metal roll is 0.6 mm or less at the deepest portion.

Furthermore, the present invention is a disposable diaper or sanitary product to which the above-mentioned hot water-soluble male-type hook-and-loop fastener is attached.

Advantageous Effects of Invention

The hot water-soluble male-type hook-and-loop fastener of the present invention (hereinafter sometimes referred to as a male-type hook-and-loop fastener) has a water dissolution temperature of any one of 45 to 90°C, and does not dissolve in water having a temperature of lower than 45°C. In consideration of the fact that it is important that the water dissolution temperature of a conventionally known water-soluble hook-and-loop fastener is 10 to 25°C, which is equivalent to that of tap water, because the purpose of the conventional water-soluble hook-and-loop fastener is to be flushed and dissolved in a toilet after use, the water dissolution temperature of the hot water-soluble hook-and-loop fastener of the present invention is much higher, and is by no means a temperature at which the conventional water-soluble hook-and-loop fastener can be flushed and dissolved in a toilet.

Since the water dissolution temperature of the hot water-soluble male-type hook-and-loop fastener of the present invention is any temperature of 45 to 90°C, as a matter of course, the hot water-soluble male-type hook-and-loop fastener of the present invention does not substantially dissolve in water having a temperature of lower than 45°C. The term "not substantially dissolve" as used herein means that, when immersed with water, even if the surface layer portion is dissolved, the inside is not dissolved, and the function as a hook-and-loop fastener is not lost, or the surface layer portion is also hardly dissolved.

Examples of resins constituting such a hot water-soluble male-type hook-and-loop fastener include polyvinyl alcohol-based resins in terms of engagement strength and hot water solubility.

To explain this, a resin called polyvinyl alcohol is a special resin which can be formed into fibers having much higher strength than ordinary fibers and which is soluble in water. The male-type hook-and-loop fastener of the present invention contains such special polyvinyl alcohol-based resins, thereby obtaining a male-type hook-and-loop fastener having both high engagement strength and hot water solubility.

The male-type hook-and-loop fastener having both high engagement strength and hot water solubility is preferably produced by injection molding, but when produced by injection molding, suitable resins include polyvinyl alcohol-based resins having a specific polymerization degree and a specific saponification degree, and a resin composition containing three substances of such polyvinyl alcohol-based resins, polyhydric alcohols or ethylene oxide-based polymers, and layered inorganic particles, in which these are mixed in a specific ratio, is preferred. By using such a special resin composition, it is possible to easily obtain a male-type molded hook-and-loop fastener which has a high engagement strength and is rapidly dissolved in hot water having any temperature in the range of 45 to 90°C but is not dissolved in water having a temperature of lower than 45°C.

Preferably, the male-type hook-and-loop fastener of the present invention is obtained by a method in which a molten material of the above-mentioned special resin composition, i.e., a resin composition containing a polyvinyl alcohol-based resin, a polyhydric alcohol or an ethylene oxide-based polymer, and layered inorganic particles, is poured onto the surface of the above-mentioned metal roll, the molten material is press-fitted into cavities in the shape of male-type engaging elements formed by perforating in rows on the surface of the metal roll, the molten material is cooled and solidified in this state, and then the molten material is peeled off from the surface of the metal roll and withdrawn from the cavities. The hot water-soluble male-type molded hook-and-loop fastener obtained by such a method has a plurality of male-type engaging elements which are arranged in a row and have a shape in which the male-type engaging elements rise from the surface of the substrate, bend in the row direction from the middle thereof, and have tip end portions facing the direction approaching the surface of the substrate (hereinafter, this shape may be referred to as an inverted J-shape), or a shape in which the male-type engaging elements rise from the surface of the substrate, bend in the row direction from the front and back of the row direction in the middle thereof, and have tip end portions facing the direction approaching the surface of the substrate (hereinafter, this shape may be referred to as a Y-shape).

Since the bending direction of such a male-type engaging element is unified and resists the pull in the male-type engaging element row direction from the engaging counterpart in cooperation, it is difficult to break, and a high engaging force is easily obtained compared to a case where the head portion (engagement expanded head portion) of the male-type engaging element extends in a direction intersecting with the male-type engaging element row or a case where the tip end portion of the stem spreads in an umbrella shape. In particular, in the present invention, it is preferable that the height of the male-type engaging element is low, and in such a case, it is possible to suppress a foreign body feeling even when attached to a portion which easily comes into contact with the skin such as a sanitary product or a disposable diaper, it is difficult to cause skin roughness even when coming into contact with the skin, and it is possible to further shorten the time required for dissolution.

Further, in the case where the male-type engaging element has an engagement expanded head portion represented by a mushroom shape, it is preferable in that the male-type engaging elements can be engaged with each other by unifying the material.

Furthermore, the polyvinyl alcohol-based resins, polyhydric alcohols or ethylene oxide-based polymers, and layered inorganic particles that may constitute the hot water-soluble male-type molded hook-and-loop fastener of the present invention are all used in large amounts for applications in contact with human skin, and therefore the hot water-soluble male-type hook-and-loop fastener of the present invention has little effect on the human body.

Brief Description of Drawings

Fig. 1 is a perspective view of an example of the hot water-soluble male-type hook-and-loop fastener of the present invention.
Fig. 2 is a perspective view of another example of the hot water-soluble male-type hook-and-loop fastener of the present invention.
Fig. 3 is a photomicrograph showing the surface of an example of the hot water-soluble male-type hook-and-loop fastener of the present invention.

Description of Embodiments

Next, the hot water-soluble male-type hook-and-loop fastener of the present invention and a method for producing the same will be described in detail.

First, as described above, the hot water-soluble male-type hook-and-loop fastener of the present invention has a water dissolution temperature in the range of 45 to 90°C. When the water dissolution temperature is lower than 45°C, in particular, lower than 40°C, the engaging force is lost by body fluids or the like during wearing. When the water dissolution temperature is higher than 90°C, the hot water-soluble male-type hook-and-loop fastener of the present invention may not be dissolved during the recovery and recycling steps. It is preferably in the range of 50 to 85°C, and more preferably in the range of 52 to 82°C.

The water dissolution temperature is a temperature measured by the following method.

[Water Dissolution Temperature (°C) of Male-type Hook-and-Loop Fastener]

A bath is prepared in which the water temperature is kept at a predetermined temperature while stirring at about 940 rpm in 2000 mL of water using a hot stirrer (SRS316HA manufactured by Advantech Co., Ltd.) and a 30 mm × 8 mmΦ stirring bar. A male-type hook-and-loop fastener cut to 20 mm × 20 mm (basis weight: 0.1 to 0.2 g/20 mm × 20 mm) is placed in the bath. The time for complete dissolution of the male-type hook-and-loop fastener is measured, and the lowest temperature at which complete dissolution is achieved in 5 minutes (or less) is defined as the water dissolution temperature. The water dissolution temperature is determined by first measuring at water temperatures of 5°C increments to find a rough water dissolution temperature, and based on the result, further measuring using a bath of 2°C increments at a water temperature near the water dissolution temperature, and further measuring using a bath of 1°C increments at a water temperature near the water dissolution temperature.

Examples of resins constituting the male-type hook-and-loop fastener satisfying the water dissolution temperature in the range of 45 to 90°C include polyvinyl alcohol (hereinafter, abbreviated as PVA)-based resins from the viewpoint of obtaining higher engagement strength in terms of water solubility, strength, and moldability.

As a male-type hook-and-loop fastener satisfying such a water dissolution temperature, a so-called woven or knitted fabric male-type hook-and-loop fastener having hook-shaped engaging elements made of thick PVA-based water-soluble monofilament yarns on the surface of a woven or knitted fabric base fabric made of PVA-based water-soluble fibers is considered. In such a woven or knitted fabric male-type hook-and-loop fastener, PVA-based fibers are mentioned as fibers having both water solubility and weaving property. In the above-mentioned PTL 1, as a male-type hook-and-loop fastener dissolving in ordinary-temperature water, a male-type hook-and-loop fastener having a hook shape formed by cutting a loop projected from a base fabric made of a woven fabric, a knitted fabric, or the like is described.

However, in the case of a woven or knitted fabric hook-and-loop fastener, a monofilament yarn made of a water-soluble PVA resin is poor in heat-setting property, and as a result, the hook shape is easily extended by light engagement and the engagement is released, so that it is difficult to obtain a sufficient engaging force. In order to prevent this, when a thick PVA-based monofilament yarn having high heat-setting property is used, it is rigid, and the hook-and-loop fastener obtained tends to be difficult to dissolve easily. In other words, it is difficult to obtain a product having hot water solubility, high engaging force, and excellent skin touch feeling. Furthermore, the hook-shaped engaging element made of such a rigid thick monofilament yarn tends to have poor skin touch feeling.

Therefore, as the hot water-soluble male-type hook-and-loop fastener of the present invention, a male-type molded hook-and-loop fastener obtained by injection-molding or the like is more preferable than a woven or knitted fabric male-type hook-and-loop fastener from the above-described viewpoint.

The resins constituting the male-type molded hook-and-loop fastener (the resins constituting the substrate and the male-type engaging elements) are preferably PVA-based resins having a specific polymerization degree and a specific saponification degree from the viewpoint of strength, moldability and hot water solubility, and furthermore, a resin composition in which a polyhydric alcohol or an ethylene oxide-based polymer is added to a PVA-based resin having such a specific polymerization degree and a specific saponification degree, or a resin composition in which layered inorganic particles are added to a PVA-based resin having such a specific polymerization degree and a specific saponification degree, is preferable.

Among these, the PVA-based resin is also described in the above-mentioned PTL 1, and this patent document describes, as the PVA-based resin, a water-soluble resin obtained by graft-polymerizing a polyoxyalkylene to a copolymer of vinyl alcohol and allyl alcohol. However, such complicated copolymerized water-soluble resins are not commercially available at present and are not easily available, and further, male-type molded hook-and-loop fasteners obtained by using resins similar to these complicated copolymerized resins are not sufficiently satisfactory in moldability, engaging force, hardness of molded products, surface tackiness, and the like. In addition, the water-soluble resin described in PTL 1 is soluble in water at room temperature, and is not soluble in hot water at 45 to 90°C, which is an object of the present invention.

The PVA-based resin used for producing the hot water-soluble male-type hook-and-loop fastener of the present invention by molding preferably has a polymerization degree (the polymerization degree of the present invention means a viscosity-average polymerization degree, and may be simply referred to as a polymerization degree) in the range of 300 to 700. Considering that a PVA-based resin used for fibers generally has a polymerization degree of 1000 or more, for example, a polymerization degree of 1200 to 1800, it can be said that the polymerization degree of the PVA-based resin used in the present invention is extremely low. As resins for forming the hook-and-loop fastener, PVA-based resins having a high polymerization degree are preferably used from the viewpoint of engagement strength, and PVA-based resins having a low polymerization degree are preferably used from the viewpoint of moldability.

When the polymerization degree is 300 or more, the breaking strength of the male-type molded hook-and-loop fastener to be obtained is improved, and when the polymerization degree is 700 or less, the melt viscosity does not become too high, the moldability is good, gelling hardly occurs, and the molten resins can reach the tip end of the cavity. As a result, it becomes easy to obtain the male-type molded hook-and-loop fastener having the male-type engaging elements extending to the tip end. In particular, when the male-type engaging element has a fine shape, the influence on the moldability becomes large. The polymerization degree is particularly preferably in the range of 330 to 600, and more preferably in the range of 340 to 550.

The PVA-based resin used may be a mixture of two or more kinds of PVA-based resins having different polymerization degrees so that the average polymerization degree is 300 to 700. However, since it is difficult to uniformly knead PVA-based resins having too different polymerization degrees, it is preferable to mix PVA-based resins having similar polymerization degrees when mixing two or more kinds of PVA-based resins.

The polymerization degree (viscosity-average polymerization degree) is a value obtained by measurement in accordance with JIS K 6726:1994. To be specific, when the saponification degree is less than 99.5 mol%, the viscosity-average polymerization degree (P) is determined by the following equation using the intrinsic viscosity [η] (L/g) measured in water at 30°C for PVA-based resins saponified to a saponification degree of 99.5 mol% or more.

$$P = ([\eta] \times 104/8.29)(1/0.62)$$

The saponification degree of PVA-based resins also affects the engagement strength, hot water solubility, and moldability of the male-type hook-and-loop fastener. To satisfy these requirements, the saponification degree of PVA-based resins is preferably in the range of 80 to 99 mol%. When the saponification degree is 80 mol% or more, the water dissolution temperature becomes high, and the water dissolution temperature in the range of 45 to 90°C is easily obtained. On the other hand, when the saponification degree is 99 mol% or less, the water dissolution temperature is less likely to exceed 90°C, which is suitable for an economical pulp recycling process, and the PVA-based resins can be dissolved more rapidly, and further, the moldability is not significantly reduced. The saponification degree is more preferably 90 to 98.5 mol%, and most preferably 93 to 97 mol%.

The PVA-based resin used in the present invention may be a mixture of two or more kinds of PVA-based resins having different saponification degrees so that the average saponification degree is 80 to 99 mol%. The saponification degree is a value obtained by measurement in accordance with JIS K 6726:1994.

In the case of PVA-based resins, when the saponification degree is high, gelling generally tends to occur, and when used for injection-molding, the molten resins cannot reach the end of the cavity, making it difficult to obtain a male-type molded hook-and-loop fastener having male-type engaging elements extending to the tip end. In particular, when the male-type engaging elements have a fine shape, the influence of gelling increases, and therefore, in order to prevent this, when a PVA-based resin having a high saponification degree is used, it is preferable to select a PVA-based resin having a low polymerization degree, and to add a polyhydric alcohol or an ethylene oxide-based polymer or layered inorganic particles to be described later to the PVA-based resin, and to increase the addition amount thereof.

The method for producing such a PVA-based resin is not particularly limited, but the PVA-based resin is generally produced by hydrolysis or alcoholysis of polyvinyl acetate, and in the present invention, the PVA-based resin is preferably a saponified product of a homopolymer of vinyl acetate. Of course, other vinyl monomers such as vinyl formate, vinyl acetate, vinyl propionate, vinyl versatate and vinyl pivalate, and further other α-olefins may be copolymerized in a small amount within a range that does not largely impair the water solubility, moldability and the like of the PVA-based resin, and further, those obtained by modifying the terminal of the polymer can also be used. Examples of the polymerization method of polyvinyl acetate include solution polymerization, bulk polymerization, pearl polymerization, and emulsion polymerization. In addition, in order to increase the water dissolution temperature of the obtained male-type molded hook-and-loop fastener, a method may be used in which the PVA-based resins present on the surfaces of the molded articles are subjected to intermolecular crosslinking.

Next, the polyhydric alcohol or ethylene oxide-based polymer used as a suitable additive material for forming the water-soluble male-type molded hook-and-loop fastener of the present invention (for forming the substrate and the male-type engaging elements) will be described.

The polyhydric alcohol or ethylene oxide-based polymer acts as a plasticizer when the PVA-based resin is molded. In the PVA-based resin, the melting temperature and the thermal decomposition temperature are close to each other, and as a result, when the PVA-based resin is melt-molded, thermal decomposition occurs at the time of molding, so that the PVA-based resin cannot be molded. However, by adding the polyhydric alcohol or the ethylene oxide-based polymer to the PVA-based resin, the PVA-based resin can be molded.

The polyhydric alcohol used is a trihydric or higher aliphatic alcohol, and specific examples thereof include glycerin, pentaerythritol, and sorbitol, and an alkylene oxide such as ethylene oxide or propylene oxide may be added to the alcohol group. Among these, a substance obtained by adding 2 to 10 mol of ethylene oxide to glycerin and sorbitol is preferable because the plasticizing effect of the PVA-based resin is high.

Further, specific examples of the ethylene oxide-based polymer include polyethylene glycol, and polyethylene glycol is preferred particularly from the viewpoint of being less likely to bleed out and from the viewpoint of being less likely to vaporize at the time of forming the male-type molded hook-and-loop fastener and thus not causing deterioration of the working environment. In particular, as polyethylene glycol, a low polymer having a number-average molecular weight of 300 to 700 is most preferred among the polyhydric alcohols or the ethylene oxide-based polymers.

By using such a polyethylene glycol having a low number-average molecular weight, the moldability of the PVA-based resin (resin composition containing the PVA-based resin and the polyethylene glycol) is further enhanced, and the resulting male-type molded hook-and-loop fastener is made flexible. In particular, when the number-average molecular weight is 300 or more, the polyethylene glycol is less likely to bleed out on the surfaces of the resulting male-type molded hook-and-loop fastener and the surfaces are less likely to be sticky, and when the number-average molecular weight is 700 or less, the moldability becomes more excellent. Polyethylene glycol having a number-average molecular weight in the range of 350 to 500 is more preferable, and polyethylene glycol having a number-average molecular weight in the range of 370 to 450 is particularly preferable. The polyethylene glycol may be copolymerized with a small amount of an alkylene oxide such as propylene oxide.

The number-average molecular weight of the polyethylene glycols in the present invention is a value measured as described below. A polyethylene glycol sample 1 g to be measured (weighed to the digit of 0.1 mg) is placed in an accurately weighed anhydrous phthalpyridine solution 25 mL in a stoppered flask, and the flask is stoppered, heated in a boiling water bath for 2 hours, and then allowed to stand until it reaches room temperature. The flask is then charged with 0.5 mol/L aqueous sodium hydroxide 50 mL (accurately weighed) and 10 drops of phenolphthalein titrant. The liquid in the flask is titrated with a 0.5 mol/L sodium hydroxide aqueous solution, and the point at which the liquid maintains a red color for 15 seconds is taken as the end point. From the titration amount M (mL) of the main test thus obtained and the titration amount R (mL) obtained by a blank test performed in the same manner as described above except that the polyethylene glycol sample is not used, the number-average molecular weight is calculated by { (collection amount (g) of polyethylene glycol sample) $\times$ 4000}/{(M - R) $\times$ 0.5 (mol/L)}.

The addition amount of the polyhydric alcohol or the ethylene oxide-based polymer (these compounds may be collectively referred to as polyethylene glycols) is preferably in a range of 5 to 45 parts by mass with respect to 100 parts by mass of the PVA-based resin. When the amount is less than 5 parts by mass, the addition effect of the polyethylene glycols, that is, the improvement of moldability and the flexibility of the molded article cannot be obtained, and when the amount exceeds 45 parts by mass, the polyethylene glycols bleed out on the surfaces of the obtained male-type molded hook-and-loop fastener, the surfaces become sticky, and the male-type engaging elements of the obtained male-type molded hook-and-loop fastener do not have sufficient breaking strength. The amount is more preferably in the range of 10 to 40 parts by mass, and particularly preferably in the range of 12 to 38 parts by mass.

Layered inorganic particles are preferably added to the raw materials (resin composition) constituting the water-soluble male-type molded hook-and-loop fastener of the present invention. That is, layered inorganic particles are preferably added to the raw materials (resin composition) constituting the substrate and the male-type engaging element. The layered inorganic particles reduce the stickiness of the surfaces of the resulting male-type molded hook-and-loop fastener, and further, since the layers are arranged in parallel to the flow direction of the resins at the time of molding, the flowability of the molten liquid is not largely impaired in spite of the addition of the solid matter, and excellent breaking strength and the like are imparted to the resulting molded product (water-soluble male-type molded hook-and-loop fastener).

When a male-type engaging element is produced by a method in which a resin molten material is pressed into a cavity in the shape of a male-type engaging element that has been perforated in the surface of a metal roll, the resin molten material is cooled and solidified in that state, and then peeled from the surface of the metal roll, the layer surfaces of the layered inorganic particles added to the resin molten material are arranged in parallel to the flow direction of the resin molten material. As a result, when the cooled and solidified male-type engaging elements are pulled out from the cavity, the male-type engaging elements can be prevented from being broken, torn, or cracked in the middle of the cavity, and when the male-type engaging elements of the obtained male-type hook-and-loop fastener are engaged with the loop-shaped engaging elements and peeled off, the male-type engaging elements can be prevented from being broken or torn. Furthermore, since the layer surfaces of the layered inorganic particles are arranged in parallel to the surfaces of the molded product (hot water-soluble male-type hook-and-loop fastener), it is easy to prevent the polyethylene glycols from bleeding out from the inside of the molded product to the surfaces of the molded product. On the other hand, when the inorganic particles have a needle-like or granular shape, it is also difficult to prevent the bleeding out of the layered inorganic particles.

Specific examples of the layered inorganic particles include kaolin, halloysite, talc, pyrophyllite, smectite, vermiculite, and mica, and among these, talc is preferable. Talc is a pulverized product of hydrated magnesium silicate, and has the effects of enhancing the moldability when molding the male-type molded hook-and-loop fastener, enhancing the strength of the obtained male-type engaging elements, and making the surface of the obtained male-type molded hook-and-loop fastener non-sticky.

That is, the male-type molded hook-and-loop fastener of the present invention is preferably produced by pulling out male-type engaging elements from cavities of a die, and by adding the above-described layered inorganic particles to the molding material, it is possible to reduce tearing of the male-type engaging elements in the middle of the cavities when pulling out, to reduce tearing of the molded male-type engaging elements during use, and to prevent the surface of the obtained male-type molded hook-and-loop fastener from becoming sticky even under high-humidity conditions. The average particle diameter of such layered inorganic particles is preferably in the range of 0.1 to 100 μm, and particularly preferably in the range of 1 to 20 μm. The term "average particle diameter" as used herein refers to a 50% particle diameter (D50), and can be measured with a particle size distribution measuring device utilizing a laser Doppler method (Nanotrac (registered trademark) particle size distribution measuring device UPA-EX150, manufactured by Nikkiso Co., Ltd.) or the like.

The addition amount of such layered inorganic particles is preferably 4 to 25 parts by mass with respect to 100 parts by mass of the PVA-based resin. When the addition amount is less than 4 parts by mass, the above-described effect of adding the layered inorganic particles cannot be sufficiently obtained, and on the other hand, when the addition amount exceeds 25 parts by mass, the fluidity of the resin is reduced, and the moldability is impaired. The addition amount of the layered inorganic particles is preferably in the range of 5 to 20 parts by mass and in the range of 1/3 to 2/3 of the addition amount of the polyethylene glycols, and particularly preferably in the range of 7 to 15 parts by mass and in the range of 2/5 to 3/5 of the addition amount of the polyethylene glycols.

The male-type hook-and-loop fastener of the present invention is preferably molded from the resin composition containing the PVA-based resins, the polyethylene glycols, and the layered inorganic particles as described above, but in addition to these, other substances may be added as long as the moldability is not impaired and the effects of the present invention such as the strength and the water solubility of the resulting male-type hook-and-loop fastener are not impaired. For example, when colorants such as pigments and dyes are contained, a state in which hook-and-loop fastener is dissolved in water can be easily visually observed. In addition, reinforcing fillers, deodorants, antifungal agents, antibacterial agents, and the like can also be added.

The total amount of the PVA resins, the polyethylene glycols, and the layered inorganic particles in the material constituting the male-type molded hook-and-loop fastener is preferably 80% by mass or more, more preferably 90% by mass or more, still more preferably 95% by mass or more, for example, 100% by mass.

From the viewpoint of obtaining a high engaging force, the hot water-soluble male-type hook-and-loop fastener preferably has the male-type engaging elements arranged in a row, and each of the male-type engaging elements has a shape rising from the surface of the substrate, bending in the row direction from the middle thereof, and having a tip end portion facing a direction approaching the surface of the substrate, or a shape rising from the surface of the substrate, bending in the row direction by being divided into front and back in the row direction in the middle thereof, and having divided tip end portions facing a direction approaching the surface of the substrate.

The term "the middle thereof" refers to a portion of the male-type engaging element from a portion where the male-type engaging element is in contact with the surface of the substrate to the tip end of the male-type engaging element.

Next, a method of molding a male-type molded hook-and-loop fastener from the hot water-soluble resin composition containing the PVA resin will be described.

As a specific method of producing a hot water-soluble male-type molded hook-and-loop fastener suitable as the hot water-soluble male-type molded hook-and-loop fastener of the present invention, there is used a method of producing a sheet having a plurality of male-type engaging elements on the surface thereof by pouring a molten material of the resin composition in a sheet shape on the surface of a metal roll having a plurality of cavities having a shape of male-type engaging elements on the surface thereof and press-fitting the molten material into the cavities, and after cooling and solidifying the molten material, peeling the molten material from the metal roll surface and simultaneously pulling the molten material out of the cavities.

That is, the method for producing a hot water-soluble male-type hook-and-loop fastener is a method for producing a hot water-soluble male-type hook-and-loop fastener, including the steps of: pouring a molten material of a resin composition satisfying the following (1) and (2) onto the surface of a metal roll satisfying the following (A), press-fitting the molten material into cavities in the shape of male-type engaging elements formed by perforating the surface of the metal roll, cooling and solidifying the molten material in this state, and then peeling the molten material from the surface of the metal roll and withdrawing the molten material from the cavities:

(A) the metal roll is formed by superposing ring-shaped dies in which the cavities are engraved on the outer circumference, the cavities are arranged in a row in the circumferential direction of the metal roll on the surface of the metal roll, and the cavities are bent in the row direction of the cavities in the middle and the tip end portions thereof approach the surface of the metal roll, or the cavities are bifurcated in the middle and bent in the row direction respectively and the tip end portions thereof approach the surface of the metal roll;,

(1) the resin composition contains a polyvinyl alcohol-based resin, a polyhydric alcohol or an ethylene oxide-based polymer, and layered inorganic particles, in which a mixing ratio of the resin composition is such that the polyhydric alcohol or the ethylene oxide-based polymer is in a range of 5 to 45 parts by mass and the layered inorganic particles are in a range of 4 to 25 parts by mass with respect to 100 parts by mass of the polyvinyl alcohol-based resin;

(2) the polyvinyl alcohol-based resin has a polymerization degree of 300 to 700 and a saponification degree of 80 to 99 mol%.

To more specifically describe the production method, a ring-shaped die having a thickness of 0.2 to 0.5 mm in which a notch in the shape of a male-type engaging element such as an inverted J-shape or a Y-shape is engraved on the outer circumference and a metal ring which is not engraved in the notch in such a shape are sequentially superposed on each other to prepare a die roll having a plurality of cavities having a notch in the shape of a male-type engaging element on the outer circumferential surface thereof.

In the case of male-type engaging elements that can be engaged in one direction, such as an inverted J-shape, it is preferable to replace half of the ring-shaped dies having the inverted J-shaped notches with a 0.2 to 0.05 mm thick ring-shaped die having an inverted J-shaped notch that is bent in the opposite direction to the inverted J-shape on the outer circumference. In this case, an inverted J-shaped ring-shaped die bent in the opposite direction and an inverted J-shaped ring-shaped die bent in the normal direction may be alternately provided, or two or more ring-shaped dies may be alternately provided.

On the surface of such a metal roll, a plurality of cavities curved in the circumferential direction of the roll are arranged in rows in the circumferential direction, and a plurality of such rows are present in parallel in the width direction of the metal roll, and in the case of an inverted J-shape, the curved direction of the cavities is reversed in units of one row or in units of a plurality of rows. At this time, in both the case of the inverted J-shape and the case of the Y-shape, the cavity becomes thinner as it goes from the metal roll surface to the tip end portion, and is gradually bent in the circumferential direction of the metal roll from the middle (between the metal roll surface and the tip end portion), and the tip end portion faces in a direction approaching the metal roll surface.

As a specific method for flow-molding a molten material of the resin composition satisfying the above (1) and (2) on the surface of a metal roll, the molten material is extruded into a gap between the metal roll and another drum roll existing at a position opposed to the metal roll and press-fitted to fill the cavity with the molten material under pressure and form a sheet having a uniform thickness on the roll surface, while the die roll is rotating, the molten material in the cavity is cooled and solidified by a refrigerant that is constantly circulated in the roll, the substrate of the resulting male-type molded hook-and-loop fastener is stretched by a nip roller having a clearance adjusted so as to have a uniform thickness, and the cooled sheet is peeled from the die roll surface and the male-type engaging element is pulled out from the cavity. Thus, a sheet-shaped material having a plurality of male-type engaging elements on the surface thereof, i.e., a male-type molded hook-and-loop fastener, is obtained.

The hot water-soluble male-type molded hook-and-loop fastener of the present invention obtained by such a method has a shape (inverted J-shape) in which a plurality of male-type engaging elements are arranged in a row, each engaging element rises from the surface of the substrate, bends in the row direction from the middle thereof, and has a tip end portion facing the direction approaching the surface of the substrate, or a shape (Y-shape) in which each engaging element rises from the surface of the substrate, bends in the row direction by being divided into front and back in the row direction in the middle thereof, and each separated tip end portion faces the direction approaching the surface of the substrate.

By having such a shape, the male-type engaging element is hard to fall against a pressure from above, and the plurality of male-type engaging elements cooperatively resist a tensile force in the engaging element row direction from the loop-shaped engaging element of the engaging counterpart, so that a high engaging force can be obtained.

In the present invention, the male-type engaging element may be directly raised from the surface of the substrate, or may be raised from a ridge-like bulge portion formed on the surface of the substrate. When the male-type engaging element is raised from the ridge-like bulge portion as described above, the rate of dissolution in water is increased, which is preferable. The height of the ridge-like bulge portion is preferably in a range of 1/20 to 1/3 of the substrate thickness from the surface of the substrate. In order to make the male-type engaging element rise from the ridge-like bulge portion, there is a method of making the diameter of the ring-shaped die with a cavity slightly smaller than that of the adjacent ring-shaped die without a cavity, or a method of shifting the center of the ring-shaped die with a cavity from the center of the adjacent ring-shaped die. Note that it is not necessary for all of the male-type engaging elements to rise from the ridge-like bulge portion, and a certain effect can be obtained even if only some of the male-type engaging elements rise from the ridge-like bulge portion.

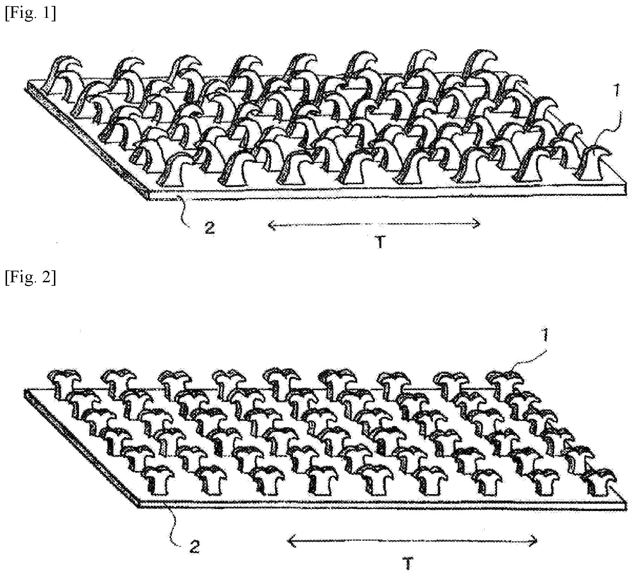

The male-type molded hook-and-loop fastener shown in Fig. 1 is a case where a plurality of male-type engaging elements (1) are arranged in a row, each engaging element has a shape (inverted J-shape) rising from the surface of the substrate (2), bending in the row direction (T) from the middle thereof, and having a tip end portion thereof facing a direction approaching the surface of the substrate. The male-type molded hook-and-loop fastener shown in Fig. 2 is a case where a plurality of male-type engaging elements (1) are arranged in a row, each engaging element has a shape (Y-shape) rising from the surface of the substrate (2), bending in the row direction by being divided into front and back in the row direction (T) in the middle thereof, and having divided tip end portions facing a direction approaching the surface of the substrate.

In particular, in the present invention, in the case where the male-type engaging element has a shape (inverted J-shape) in which the male-type engaging element rises from the surface of the substrate and bends in the row direction from the middle thereof, and the tip portion thereof faces the direction approaching the surface of the substrate, the height from the surface of the substrate of the male-type engaging element to the top portion of the male-type engaging element is preferably 1.2 mm or less, and in the case where the male-type engaging element has a shape (Y-shape) in which the male-type engaging element is divided into the front and back in the row direction in the middle thereof and bends in the row direction, and each of the divided tip end portions faces the direction approaching the surface of the substrate, the height from the surface of the substrate of the male-type engaging element to the top portion of the male-type engaging element is preferably 0.6 mm or less.

In general, the height of the male-type engaging elements of the male-type molded hook-and-loop fastener is often 1.5 mm or more, and usually has a height of about 2 to 3 mm, but in the present invention, a height of 1.2 mm or less or 0.6 mm or less, which is lower than such a conventional general height, is preferred from the viewpoint of water solubility and further from the viewpoint of use (skin touch property).

That is, in the case where the height of the male-type engaging element is low as described above, in combination with the fact that the male-type engaging element is flexible, the foreign body feeling can be suppressed even when the male-type engaging element is attached to a portion which easily comes into contact with the skin such as a sanitary product, skin roughness is hardly caused even when the male-type engaging element comes into contact with the skin, and the time required for dissolution can be further shortened.

The lower limit of the height of the male-type engaging elements is not particularly limited, and may be, for example, 0.1 mm or more, may be 0.2 mm, or may be 0.4 mm. When the male-type engaging elements have an inverted J-shape, the lower limit of the height of the male-type engaging elements may be, for example, 0.4 mm, may be 0.6 mm, or may be 0.8 mm.

From the viewpoint of water solubility, the length of the male-type engaging elements from the top portion to the tip end portion (bent portion) is preferably 0.15 to 0.55 mm.

The width of the male-type engaging elements is preferably 0.15 to 0.3 mm from the viewpoint of water solubility.

Such a short male-type engaging element can be obtained by using a metal roll in which the cavity is not deeply engraved from the surface of the metal roll. Specifically, in the case of producing a male-type engaging element having a shape (inverted J-shape) in which the male-type engaging element rises from the surface of the substrate, bends in the row direction from the middle thereof, and the tip end portion thereof faces the direction approaching the surface of the substrate, the short male-type engaging element is easily obtained by using a metal roll in which the depth of the cavity from the surface of the metal roll is 1.2 mm or less at the deepest portion, and in the case of producing a male-type engaging element having a shape (Y-shape) in which the male-type engaging element is divided into front and back in the row direction in the middle thereof and bends in the row direction, and each divided tip end portion faces the direction approaching the surface of the substrate, the short male-type engaging element is easily obtained by using a metal roll in which the depth of the cavity from the surface of the metal roll is 0.6 mm or less at the deepest portion.

In the hot water-soluble male-type molded hook-and-loop fastener of the present invention, the thickness of the substrate layer is preferably in the range of 0.15 to 0.3 mm from the viewpoint of rapid hot water solubility and breaking strength of the hook-and-loop fastener.

In the hot water-soluble male-type molded hook-and-loop fastener of the present invention, the density of the male-type engaging elements is preferably 60 to 160 elements/cm$^2$.

The hot water-soluble male-type hook-and-loop fastener of the present invention may be a double-sided hook-and-loop fastener having male-type engaging elements on both the front and back surfaces by bonding a similar hot water-soluble male-type hook-and-loop fastener to the back surface by thermocompression bonding or with a hot water-soluble adhesive or a hot water-soluble pressure-sensitive adhesive, or a double-sided hook-and-loop fastener having male-type engaging elements on both the front and back surfaces by using a metal roll having cavities on the front surface of the metal roll on the back surface side so that the male-type engaging elements are also present on the back surface side at the time of molding. Further, a loop material (hook-and-loop fastener having loop-type engaging elements) made of a hot water-soluble woven or knitted fabric or nonwoven fabric having loop fibers on the front surface may be similarly integrated on the back surface side to form a hot water-soluble double-sided hook-and-loop fastener having male-type engaging elements on the front surface and loop-shaped engaging elements on the back surface. As a matter of course, the male-type hook-and-loop fastener and the loop material do not necessarily have to be integrated back to back with the respective substrates interposed therebetween, and may be joined in other ways as long as the bonding is performed such that the face on which the male-type engaging elements are present is the front face side and the face on which the fiber loops are present is the back face side, or the bonding may be performed such that the fiber loops are present in a place away from the back face of the place where the male-type engaging elements are present.

Since the hot water-soluble male-type hook-and-loop fastener of the present invention is rapidly dissolved by contact with hot water of 45 to 90°C to lose the engaging ability, and the male-type hook-and-loop fastener itself is completely dissolved and does not exist, the loop type hook-and-loop fastener to be an engaging counterpart may be any material other than a low-temperature soluble material such as ordinary-temperature water. Therefore, the loop type hook-and-loop fastener of the engaging counterpart does not need to be hot water-soluble, but by making the engaging counterpart also hot water-soluble, it is possible to eliminate the existence of all the hook-and-loop fastener itself by dissolution during recovery and recycling.

In addition, in the case where the loop type hook-and-loop fastener to be the engaging counterpart is also dissolved by being in contact with hot water of 45 to 90°C as in the case of the hot water-soluble male-type hook-and-loop fastener, it is preferable from the viewpoint that the reliability of the loss of the engaging ability with respect to hot water is improved by combining the hook-and-loop fasteners with each other, and at the same time as the hot water-soluble male-type hook-and-loop fastener, it is almost completely dissolved and does not exist.

The hot water-soluble loop type hook-and-loop fastener used as such an engaging counterpart is preferably made of a fiber that can be dissolved in hot water at or near the same temperature as that of the male-type hook-and-loop fastener, and PVA-based resins are particularly preferred as the water-soluble fibers because they have excellent tensile strength and excellent handleability. Examples thereof include hot water-soluble PVA-based fibers (Kuralon K-II (registered trademark) WN-4 to 8, WQ-9) sold by Kuraray Co., Ltd., which are obtained by dry-wet or wet-spinning a spinning solution obtained by dissolving a PVA-based resin having a saponification degree of 88 to 98 mol% and a polymerization degree of 1500 to 2000 in dimethyl sulfoxide in a methanol bath, hot water-soluble PVA fibers obtained by blending a PVA-based resin having a saponification degree of 89 to 97.5 mol% and a polymerization degree of 300 to 450 with an ethylene oxide adduct of polyethylene glycol or sorbitol, and melt-spinning the blend, and hot water-soluble PVA-based fibers obtained by wet-spinning a spinning solution obtained by dissolving a PVA-based resin having a saponification degree of 88 to 98 mol% in water in a saturated sodium sulfate aqueous solution bath.

Examples of the loop type hook-and-loop fastener made of such a hot water-soluble PVA-based fiber include a hook-and-loop fastener in which loops (engaging elements) made of such a hot water-soluble fiber are present on the surface of a nonwoven fabric or a woven or knitted fabric made of the hot water-soluble fiber.

Specifically, in the case of a nonwoven fabric, there may be mentioned a nonwoven fabric in which loops (engaging elements) made of the hot water-soluble fiber are present on the surface thereof by forming the hot water-soluble fiber into a web, entangling the web by needle punching or the like, and optionally raising the surface thereof.

In the case of a woven or knitted fabric, there may be mentioned a woven fabric-based loop type hook-and-loop fastener in which a woven fabric is prepared using spun yarns of hot water-soluble fibers as warp yarns and weft yarns, and such spun yarns are woven into the woven fabric in parallel with the warp yarns to form loops protruding from the woven fabric surface, and a knitted loop type hook-and-loop fastener in which a knitted fabric is prepared using spun yarns of such hot water-soluble fibers and loops of hot water-soluble fibers are formed on the woven fabric by raising the knitted fabric with a needle cloth or the like. Further, a woven fabric may be prepared by using a multifilament yarn as the hot water-soluble fiber and using the multifilament yarn as a warp yarn and a weft yarn, and the hot water-soluble multifilament yarn for the loop-shaped engaging elements may be woven in parallel with the warp yarn and may be protruded in a loop shape from the woven fabric surface to form a woven fabric-based loop type hook-and-loop fastener. In order to prevent the loop-shaped engaging elements from being pulled out at the time of engagement and peeling, it is preferable to apply a hot water-soluble resin to the back surface of the obtained woven fabric.

Further, a multifilament yarn which is such a hot water-soluble fiber may be formed into a nonwoven fabric by a spun-bond method, and the surface thereof may be raised to protrude loops made of the hot water-soluble fiber on the surface thereof.

In addition, as described above, the hot water-soluble male-type hook-and-loop fastener of the present invention may be a hot water-soluble hook-and-loop fastener (hereinafter, simply referred to as a hot water-soluble loop type hook-and-loop fastener) having male-type engaging elements on the front surface and female-type engaging elements (hereinafter, referred to as loop-shaped engaging elements) on the back surface.

To be more specific, the hot water-soluble male-type hook-and-loop fastener and the hot water-soluble loop type hook-and-loop fastener may be superposed back-to-back so that the engaging elements are on the outside, respectively, and the two may be joined in places or entirely by a hot water-soluble adhesive or thermocompression bonding.

Alternatively, the end of a hot water-soluble male-type molded hook-and-loop fastener having male-type engaging elements on the front surface is joined to the end of a hot water-soluble loop type hook-and-loop fastener having loop-shaped engaging elements on the back surface, so that the ends other than the ends do not overlap each other, and the surface having the male-type engaging elements is on the front surface side and the surface having the loop-shaped engaging elements is on the back surface side, and the overlapped portions are subjected to bonding by a hot water-soluble adhesive or thermocompression bonding, so that the bonding of the two may be such that the male-type engaging elements are present on the front surface and the loop-shaped engaging elements are present on the back surface in a place away from the place where the male-type engaging elements are present (i.e., the place where the male-type engaging elements are present and the place where the loop-shaped engaging elements are present are not back-to-back but extend in directions away from each other across the bonding location).

In the case of the hot water-soluble hook-and-loop fastener obtained by bonding the hot water-soluble male-type hook-and-loop fastener and the hot water-soluble loop type hook-and-loop fastener so that the loop-shaped engaging elements are present on the back surface of the place away from the place where the male-type engaging elements are present, the hot water-soluble loop type hook-and-loop fastener is required to have sufficient tensile strength even alone, and thus the hot water-soluble loop type hook-and-loop fastener is preferably one in which the hot water-soluble fiber loops are present on the front surface of the tricot knitted fabric made of the hot water-soluble fibers.

The hot water-soluble male-type hook-and-loop fastener obtained by the present invention has a sufficient engaging force, does not dissolve in ordinary-temperature water, but has a property of rapidly dissolving in hot water at any temperature in the range of 45 to 90°C, and is not added with anything harmful to the human body. Therefore, the hot water-soluble male-type hook-and-loop fastener alone or in combination with the hot water-soluble female-type hook-and-loop fastener can be used as a fixing material for fixing a sanitary product to underwear, a waist fixing material for a disposable diaper, or a fixing material for other disposable products.

In addition, when a used disposable product having the hot water-soluble male-type hook-and-loop fastener of the present invention attached thereto is put into a step of recovering pulp, fibers, highly water-absorbing resins, or films from the used disposable product having the hot water-soluble male-type hook-and-loop fastener of the present invention attached thereto, the male-type hook-and-loop fastener is immediately dissolved and disappears under the presence of hot water, and the presence of the hook-and-loop fastener of the present invention does not hinder the recovery of pulp, fibers, highly water-absorbing resins, or films.

Examples

Hereinafter, the present invention will be described by way of Examples. In the examples, E40000 (manufactured by Kuraray Fastening Co., Ltd.) was used as a loop type hook-and-loop fastener of an engaging counterpart, and an initial engaging force and an engaging force after repeating engagement and peeling 10 times were measured in accordance with JIS L 3416:2000.

With respect to the presence or absence of stickiness on the surface of the hook-and-loop fastener, the obtained hook-and-loop fastener was left under the condition of a temperature of 30°C and a relative humidity of 100% for 4 hours, and then the surfaces of the hook-and-loop fastener were touched and the presence or absence was judged by the tactile sensation.

Example 1

As a die, a ring-shaped die having a thickness of 0.30 mm and a diameter of 212 mm in which a shape of a hook-shaped engaging element (inverted J-shaped engaging element) having a depth of 0.90 mm was engraved on the outer circumference, a metal ring having a thickness of 0.30 mm and a diameter of 212 mm in which such a shape was not engraved, a ring-shaped die having a thickness of 0.30 mm and a diameter of 212 mm in which a shape of a hook-shaped engaging element facing in the direction opposite to the above shape of the hook-shaped engaging element was engraved on the outer circumference, and a metal ring having a thickness of 0.30 mm and a diameter of 212 mm in which such a shape was not engraved were sequentially superposed on each other, thereby preparing a die roll having a width of 120 mm and having a plurality of cavities having an inverted J-shaped engaging element shape and cavities having an engaging element shape facing in the opposite direction on the outer peripheral surface thereof. The diameter of the ring-shaped die in which the hook-shaped engaging element shape was engraved on the outer circumference was made slightly smaller than the diameters of the adjacent rings on both sides thereof (to the extent that ridge bulge portions having a height of 0.03 mm to be described later are formed).

A hot water-soluble male-type molded hook-and-loop fastener (hot water-soluble male-type hook-and-loop fastener) is produced by extruding a molten material, which is obtained by melting, at 190°C, a resin composition a-1, which is obtained by mixing 25 parts by mass of a polyethylene glycol having a number-average molecular weight of 400 and 12 parts by mass of talc (average particle diameter: 4 $\mu$m) with respect to 100 parts by mass of a PVA-based resin having a polymerization degree of 345 and a saponification degree of 93 mol% (consisting of 50 parts by mass of a PVA-based resin obtained by saponification of vinyl acetate having a polymerization degree of 300 to a saponification degree of 88 mol% and 50 parts by mass of a PVA-based resin obtained by saponification of vinyl acetate having a polymerization degree of 390 to a saponification degree of 98 mol%), into the space between the die roll and another drum roll located at a position facing the die roll, compressing the molten material by the die roll and the drum roll to fill the cavity thereof with the molten material and form a sheet having a uniform thickness on the roll surface, cooling the molten material in the cavity with water constantly circulated in the roll while the die roll is rotating, stretching the molten material by a nip roll having a space adjusted so as to have a substrate thickness of 0.20 mm, and peeling the cooled and solidified sheet from the die roll surface.

The obtained hot water-soluble male-type molded hook-and-loop fastener had a plurality of male-type engaging elements arranged in a row, each of the male-type engaging elements having a shape (inverted J-shape) rising from above a ridge-shaped bulge portion (height: 0.03 mm) formed on the surface of the substrate, bending in the row direction from the middle thereof, and having a tip end portion facing a direction approaching the surface of the substrate, and the height of the male-type engaging element was 0.94 mm, and the density of elements was 110 elements/cm$^2$. The thickness of the substrate was 0.21 mm.

The capability of the obtained hot water-soluble male-type molded hook-and-loop fastener is shown in Table 1 below. As is clear from this table, the water dissolution temperature was 55°C, which was much higher than the temperature at which the hot water-soluble male-type molded hook-and-loop fastener was dissolved in an ordinary-temperature water, and it was suitable as a waist fixing material for disposable diapers with almost no problem in any of the engaging force, flexibility, and surface stickiness. In particular, when it was used as a waist fixing material for disposable diapers, it was not dissolved by urine during wearing, and there was no problem in use. After use, the disposable diaper was folded into a round shape, and the folded state was fixed by using a hot water-soluble male-type molded hook-and-loop fastener attached to the disposable diaper in this state. Then, when the disposable diaper in this state was immersed in stirred hot water of 80°C, the male-type hook-and-loop fastener was immediately dissolved and disappeared, and the disposable diaper was unfolded from the folded state, so that the disposable diaper was in a state of being easily treated thereafter.

Further, as an engaging counterpart of such a hot water-soluble male-type molded hook-and-loop fastener, a hot water-soluble PVA fiber (Kuralon K-II (registered trademark) WN-6 having a thickness of 1.7 dtex and a fiber length of 51 mm) manufactured by Kuraray Co., Ltd., which can be dissolved in 60°C of water, was webbed and entangled by needle punching, and the surfaces thereof were raised with a needle cloth to produce a nonwoven fabric having a weight per area of 200 g/m$^2$ and having loops made of the same fiber on the surfaces thereof, and the nonwoven fabric was used as an engaging counterpart and engaged. The engaging force was high, slightly inferior to that of the male-type hook-and-loop fastener, and the engaging property was excellent. Then, in a state in which such a hot water-soluble male-type molded hook-and-loop fastener and the nonwoven fabric made of the hot water-soluble fiber were engaged with each other, the hook-and-loop fastener was cut out into a square of 2 cm, immersed in hot water of 75°C being stirred, and the dissolved state was observed. As a result, the engagement of the hook-and-loop fastener was peeled off in 30 seconds, and both the hook-and-loop fastener and the nonwoven fabric were completely dissolved in 4 minutes and 35 seconds.

Table 1

| | | | Water dissolution temperature (°C) | Engaging force | | | | Skin touch property | Surface stickiness |
|---|---|---|---|---|---|---|---|---|---|
| | | | | Initial value | | After 10 times of engagement and peeling | | | |
| | | | | Shear (N/cm$^2$) | Peel (N/cm) | Shear (N/cm$^2$) | Peel (N/cm) | | |
| Example 1 | | Male-type hook-and-loop fastener | 55 | 19.4 | 1.38 | 18.6 | 1.32 | Very good | None at all |
| | | Nonwoven fabric in which loops are present (engaging counterpart) | 55 | 19.1 | 1.36 | 18.3 | 1.30 | Very good | None at all |

Examples 2 to 6

Five kinds of hot water-soluble male-type molded hook-and-loop fastener (hot water-soluble male-type hook-and-loop fastener) were produced in the same manner as in Example 1 except that the PVA-based resins used for molding in Example 1 were changed to the following PVA1 to PVA5 to produce resin compositions a-2 to a-6.

[PVA1: Example 2] PVA-based resin having a polymerization degree of 330 and a saponification degree of 91.3 mol% (consisting of 67 parts by mass of a PVA-based resin obtained by saponification of vinyl acetate having a polymerization degree of 300 to a saponification degree of 88 mol% and 33 parts by mass of a PVA-based resin obtained by saponification of vinyl acetate having a polymerization degree of 390 to a saponification degree of 98 mol%)

[PVA2: Example 3] PVA-based resin having a polymerization degree of 360 and a saponification degree of 94.7 mol% (consisting of 33 parts by mass of a PVA-based resin obtained by saponification of vinyl acetate having a polymerization degree of 300 to a saponification degree of 88 mol% and 67 parts by mass of a PVA-based resin obtained by saponification of vinyl acetate having a polymerization degree of 390 to a saponification degree of 98 mol%)

[PVA3: Example 4] PVA-based resin having a polymerization degree of 390 and a saponification degree of 98.5 mol%

[PVA4: Example 5] PVA-based resin having a polymerization degree of 372 and a saponification degree of 96.2 mol%

[PVA5: Example 6] PVA-based resin having a polymerization degree of 381 and a saponification degree of 97.1 mol%

As in Example 1, each of the obtained hot water-soluble male-type molded hook-and-loop fasteners had a plurality of male-type engaging elements arranged in a row, each of the male-type engaging elements having a shape (inverted J-shape) rising from above a ridge-shaped bulge portion (height: 0.03 mm) formed on the surface of the substrate, bending in the row direction from the middle thereof, and having a tip end portion facing a direction approaching the surface of the substrate, and the height of the male-type engaging element was 0.94 mm, and the density of elements was 110 elements/cm$^2$. The thickness of the substrate was 0.21 mm.

In the hot water-soluble male-type molded hook-and-loop fasteners produced from PVA3 and PVA5, it was noticeable that the male-type engaging elements on the surfaces thereof were present only halfway. In particular, in the hook-and-loop fastener produced from PVA3, it was considerably noticeable that the male-type engaging elements had an incomplete shape. The reason is that the resin was not filled up to the tip end portion of the cavity at the time of molding, but this did not significantly reduce the engagement strength.

The capability of the obtained five kinds of hot water-soluble male-type molded hook-and-loop fastener is shown in Table 2 below. As is clear from this table, the water dissolution temperature of the hot water-soluble male-type molded hook-and-loop fastener obtained from PVA1 of Example 2 is 50°C, which is much higher than the temperature at which it dissolves in ordinary-temperature water; the water dissolution temperature of the hot water-soluble male-type molded hook-and-loop fastener obtained from PVA2 of Example 3 is 62°C; the water dissolution temperature of the hot water-soluble male-type molded hook-and-loop fastener obtained from PVA3 of Example 4 is 80°C; the water dissolution temperature of the hot water-soluble male-type molded hook-and-loop fastener obtained from PVA4 of Example 5 is 70°C; and the water dissolution temperature of the hot water-soluble male-type molded hook-and-loop fastener obtained from PVA5 of Example 6 is 77°C, all of which have water dissolution temperatures much higher than the temperature at which they dissolve in ordinary-temperature water.

Each of the hot water-soluble male-type molded hook-and-loop fasteners obtained in Examples 2 to 6 had no problem in any of the engaging force, the flexibility, and the surface stickiness and was suitable as a waist fixing material for disposable diapers. Further, it was not dissolved by urine during wearing, and there was no problem in use. After use, each of these disposable diapers was folded into a round shape, and the folded state was fixed by using a hot water-soluble male-type molded hook-and-loop fastener attached to the disposable diaper in this state. Then, when the disposable diaper in this state was immersed in stirred hot water of 80°C, the male-type hook-and-loop fastener was immediately dissolved and disappeared, and the disposable diaper was unfolded from the folded state, so that the subsequent treatment was facilitated.

Table 2

| | Water dissolution temperature (°C) | Engaging force | | | | Skin touch property | Surface stickiness |
| | | Initial value | | After 10 times of engagement and peeling | | | |
| | | Shear (N/cm$^2$) | Peel (N/cm) | Shear (N/cm$^2$) | Peel (N/cm) | | |
| Example 2 | 50 | 18.3 | 1.25 | 18.0 | 1.21 | Very good | None at all |
| Example 3 | 63 | 19.6 | 1.40 | 18.8 | 1.36 | Very good | None at all |
| Example 4 | 80 | 20.3 | 1.51 | 19.4 | 1.46 | Good | None at all |
| Example 5 | 70 | 19.9 | 1.46 | 19.4 | 1.40 | Very good | None at all |

(continued)

| | Water dissolution temperature (°C) | Engaging force | | | | Skin touch property | Surface stickiness |
| | | Initial value | | After 10 times of engagement and peeling | | | |
| | | Shear (N/cm$^2$) | Peel (N/cm) | Shear (N/cm$^2$) | Peel (N/cm) | | |
| Example 6 | 76 | 20.2 | 1.48 | 19.9 | 1.42 | Good | None at all |

Further, as an engaging counterpart of each of such hot water-soluble male-type molded hook-and-loop fasteners, a loop nonwoven fabric made of PVA fibers soluble in 60°C of water was produced in the same manner as in Example 1 described above, and this nonwoven fabric was used as an engaging counterpart and engaged. As a result, all the hot water-soluble male-type molded hook-and-loop fasteners had high engaging force and excellent engaging property. Then, in a state where such a hot water-soluble male-type molded hook-and-loop fastener and the nonwoven fabric made of the hot water-soluble fiber were engaged with each other, it was cut out into a square of 2 cm, immersed in hot water of 75°C (80°C for the hot water-soluble male-type molded hook-and-loop fasteners of Examples 4 and 6) being stirred, and the dissolved state was observed. As a result, the engagement of the hook-and-loop fastener was peeled off in 10 to 30 seconds, and both the hook-and-loop fastener and the nonwoven fabric were completely dissolved in 2 minutes 25 seconds to 4 minutes 6 seconds. In addition, none of the hook-and-loop fastener of these Examples dissolved at a water temperature of lower than 49°C.

Comparative Examples 1 and 3

Hot water-soluble male-type molded hook-and-loop fasteners were produced in the same manner as in Example 1 except that the PVA-based resin used for molding in Example 1 was changed to any of the following PVA6 to PVA7 to produce resin compositions b-1 to b-3. With respect to PVA6, the strength of the male-type engaging elements was low and they were easily broken during molding, and with respect to PVA8, the melt viscosity was too high and gelling occurred in the die and the molten resin could not reach the tip end of the cavity, and as a result, in both cases, it was not possible to produce a good male-type molded hook-and-loop fastener. On the other hand, with respect to PVA7, there was no problem in the molding, and a male-type molded hook-and-loop fastener having the same shape as that of Example 1 was obtained.

[PVA6: Comparative Example 1] PVA-based resin having a polymerization degree of 250 and a saponification degree of 74 mol%
[PVA7: Comparative Example 2] PVA-based resin having a polymerization degree of 500 and a saponification degree of 75 mol%
[PVA8: Comparative Example 3] PVA-based resin having a polymerization degree of 1200 and a saponification degree of 99.9 mol%

As a result of measuring the water dissolution temperature of the defect male-type molded hook-and-loop fastener obtained from PVA8 and the hot water-soluble male-type molded hook-and-loop fastener obtained from PVA7, the water dissolution temperature of the defect male-type molded hook-and-loop fastener obtained from PVA8 was 97°C, that of the water-soluble male-type molded hook-and-loop fastener obtained from PVA7 was 27°C, and that of the defect male-type molded hook-and-loop fastener obtained from PVA6 was 25°C.

It can be seen that when the water dissolution temperature is high as in the male-type molded hook-and-loop fastener from PVA8, a large amount of water at a very high temperature is required in the step of recovering pulp from a disposable product and forming it into a wet nonwoven fabric again, and thus it cannot be adopted from the viewpoint of economic efficiency.

On the other hand, when the water dissolution temperature is too low as in the hook-and-loop fastener from PVA7, there is a concern that the hook-and-loop fastener will be dissolved by urine when used in disposable diapers, and in order to avoid this, a special structure that does not touch urine is required, and it has been found that this is not general-purpose in this respect.

Example 7

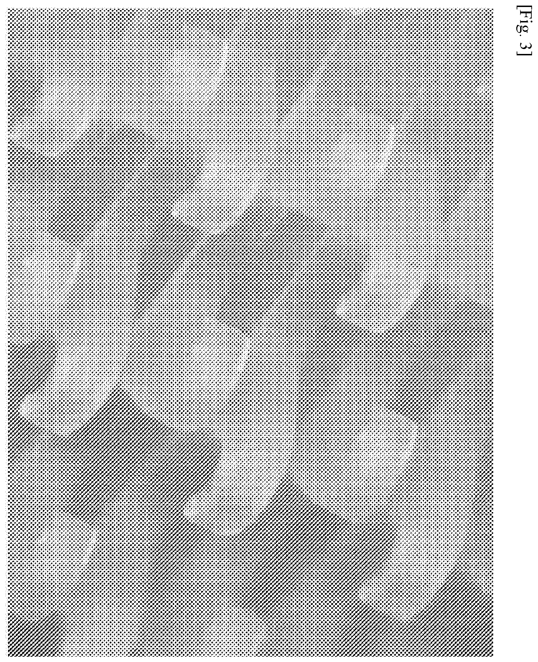

A hot water-soluble male-type molded hook-and-loop fastener was produced using the same resin composition a-1 as in Example 1, except that a ring-shaped die having a thickness of 0.3 mm and a cavity depth of 1.2 mm was used as the die roll for molding. The obtained water-soluble male-type molded hook-and-loop fastener had male-type engaging elements having a height of 1.26 mm at a density of 136 elements/cm$^2$. The surface of the hook-and-loop fastener was as shown in Fig. 3, that is, the hook-and-loop fastener had a plurality of male-type engaging elements arranged in a row, and each of the engaging elements has a shape (inverted J-shape) rising from the surface of the substrate, bending in the row direction from the middle thereof, and has a tip end portion thereof facing a direction approaching the surface of the substrate, and the thickness of the substrate was 0.23 mm. The capability of the obtained hot water-soluble male-type molded hook-and-loop fastener is shown in Table 3 below.

The obtained male-type molded hook-and-loop fastener had a large size of the male-type engaging elements and was somewhat inferior to that of Example 1 in terms of the speed at the time of hot-water melting, but there was no problem in terms of either the engaging force or the surface stickiness.

However, when it is used as an attaching material to an underwear such as a disposable diaper or a sanitary product, it is inferior in terms of skin touch, so that the attaching method needs to be devised. On the other hand, when the obtained male-type molded hook-and-loop fastener was used as a waist fixing material for a disposable diaper, it did not dissolve in urine during wearing. After use, as in the case of Example 1, the disposable diaper was folded into a round shape, and the folded state was fixed by using a hot water-soluble male-type molded hook-and-loop fastener attached to the disposable diaper in this state. Then, when the disposable diaper in this state was immersed in stirred hot water of 80°C, the male-type hook-and-loop fastener was dissolved and disappeared, and then the disposable diaper was released from the folded state and spread, so that the disposable diaper was in a state of being easily treated thereafter. In addition, none of the hook-and-loop fastener of these Examples dissolved at a water temperature of lower than 49°C.

Example 8

In Example 1, a 0.3 mm thick ring-shaped die in which a 0.55 mm deep Y-shaped notch was engraved on the outer circumference was used as the shape of the cavity of the die roll used for molding, and the same resin composition a-1 as in Example 1 was used to produce a hot water-soluble male-type molded hook-and-loop fastener. The obtained hot water-soluble male-type molded hook-and-loop fastener had male engaging elements arranged in rows on the surface thereof, each of the engaging elements having a shape rising from the surface of the substrate, being divided into front and back in the row direction and bent in the row direction in the middle thereof, and each of the divided tip end portions facing a direction approaching the surface of the substrate, i.e., the engaging elements had Y-shape, the height was 0.55 mm, the density of elements was 147 elements/cm$^2$, and the thickness of the substrate was 0.18 mm. The capability of the obtained hot water-soluble male-type molded hook-and-loop fastener is shown in Table 3 below.

The obtained male-type molded hook-and-loop fastener had excellent hot water solubility and engaging force equivalent to those of Example 1, and the surface stickiness was not felt at all as in Example 1, and was excellent in terms of ease of use. Furthermore, even when used for applications in which the skin was touched, it was excellent in terms of a gentle feel on the skin touch and was not dissolved by urine during wearing, and there was no problem in use.

After use, the disposable diaper was folded into a round shape, and the folded state was fixed by using a hot water-soluble male-type molded hook-and-loop fastener attached to the disposable diaper in this state. Then, when the disposable diaper in this state was immersed in stirred hot water of 80°C, the male-type hook-and-loop fastener was immediately dissolved and disappeared, and the disposable diaper was released from the folded state and spread, so that the disposable diaper was in a state of being easily treated thereafter. In addition, none of the hook-and-loop fastener of these Examples dissolved at a water temperature of lower than 49°C.

Table 3

| | | Engaging force | | | | Skin touch property | Surface stickiness |
|---|---|---|---|---|---|---|---|
| | Water dissolution temperature (°C) | Initial value | | After 10 times of engagement and peeling | | | |
| | | Shear (N/cm$^2$) | Peel (N/cm) | Shear (N/cm$^2$) | Peel (N/cm) | | |
| Example 7 | 55 | 20.3 | 1.49 | 19.8 | 1.46 | A little problematic | None at all |

(continued)

| | Water dissolution temperature (°C) | Engaging force | | | | Skin touch property | Surface stickiness |
| | | Initial value | | After 10 times of engagement and peeling | | | |
| | | Shear (N/cm$^2$) | Peel (N/cm) | Shear (N/cm$^2$) | Peel (N/cm) | | |
| Example 8 | 55 | 17.3 | 0.90 | 16.9 | 0.86 | Very good | None at all |

Example 9

A hot water-soluble male-type molded hook-and-loop fastener was produced in the same manner as in Example 1, except that the polyethylene glycol mixed with the PVA-based resin was changed to a 2 mol% ethyleneoxide adduct of sorbitol to prepare a resin composition a-7. As in Example 1, the obtained male-type molded hook-and-loop fastener had a plurality of male-type engaging elements arranged in a row, each of the male-type engaging elements having a shape (inverted J-shape) rising from above a ridge-shaped bulge portion (height: 0.03 mm) formed on the surface of the substrate, bending in the row direction from the middle thereof, and having a tip end portion facing a direction approaching the surface of the substrate, and the height of the male-type engaging element was 0.94 mm, and the density of elements was 110 elements/cm$^2$. The thickness of the substrate was 0.21 mm. The capability of the obtained hot water-soluble male-type molded hook-and-loop fastener is shown in Table 4 below.

The obtained male-type molded hook-and-loop fastener had excellent hot water solubility and engaging force equivalent to those of Example 1, and the surface stickiness was not felt at all as in Example 1, and was excellent in terms of ease of use. Furthermore, even when used for applications in which the skin was touched, it was excellent in terms of a gentle feel on the skin touch and was not dissolved by urine during wearing, and there was no problem in use.

Table 4

| | Water dissolution temperature (°C) | Engaging force | | | | Skin touch property | Surface stickiness |
| | | Initial value | | After 10 times of engagement and peeling | | | |
| | | Shear (N/cm$^2$) | Peel (N/cm) | Shear (N/cm$^2$) | Peel (N/cm) | | |
| Example 9 | 54 | 19.1 | 1.35 | 18.2 | 1.28 | Very good | None at all |

Examples 10 to 13

Four kinds of hot water-soluble male-type molded hook-and-loop fasteners were produced in the same manner as in Example 1, except that the resin composition a-1 used for molding in Example 1 was changed to the following resin compositions a-8 to a-11.

[Resin Composition a-8: Example 10] Resin composition a-8 was prepared in the same manner as in Example 1 except that the amounts of polyethylene glycol and talc to be added were changed to 38 parts by mass of polyethylene glycol and 22 parts by mass of talc with respect to 100 parts by mass of the PVA-based resin.
[Resin Composition a-9: Example 11] Resin composition a-9 was prepared in the same manner as in Example 1 except that the amounts of polyethylene glycol and talc to be added were changed to 10 parts by mass of polyethylene glycol and 5 parts by mass of talc with respect to 100 parts by mass of the PVA-based resin.
[Resin Composition a-10: Example 12] Resin composition a-10 was prepared in the same manner as in Example 1 except that the polyethylene glycol to be added was changed to polyethylene glycol having a number-average molecular weight of 600.
[Resin Composition a-11: Example 13] Resin composition a-11 was prepared in the same manner as in Example 1 except that the talc to be added was changed to talc having an average particle diameter of 1.5 $\mu$m.

**EP 4 364 606 A1**

In the case of Example 10, the fluidity of the molten liquid of the resin composition a-8 used for the molding of the male-type molded hook-and-loop fastener was slightly low, and a small number of male-type engaging elements in which the molten liquid seemed not to reach the tip end portion of the cavity were observed, and in the case of Example 11 described above, a very small number of male-type engaging elements were torn off in the middle when being pulled out from the cavity. However, the male-type molded hook-and-loop fasteners obtained according to Examples 10 and 11 did not have problems as a product, and flexible hook-and-loop fasteners having hook-shaped male-type engaging elements faithful to the cavity were obtained. On the other hand, in the case of Examples 12 and 13, there were no problems in terms of molding and products. The capability of the male-type molded hook-and-loop fastener of each of Examples 10 to 13 thus obtained is shown in Table 5 below.

Table 5

| | Water dissolution temperature (°C) | Engaging force | | | | Skin touch property | Surface stickiness |
| | | Initial value | | After 10 times of engagement and peeling | | | |
| | | Shear (N/cm$^2$) | Peel (N/cm) | Shear (N/cm$^2$) | Peel (N/cm) | | |
|---|---|---|---|---|---|---|---|
| Example 10 | 55 | 18.9 | 1.22 | 18.1 | 1.20 | Very good | Although it is slightly sticky, there is no problem in handling. |
| Example 11 | 55 | 19.8 | 1.42 | 19.2 | 1.38 | Slightly inferior flexibility | None at all |
| Example 12 | 55 | 19.6 | 1.40 | 18.7 | 1.37 | Very good | None at all |
| Example 13 | 55 | 19.5 | 1.38 | 18.5 | 1.33 | Very good | None at all |

All of the hot water-soluble male-type hook-and-loop fasteners of Examples 10 to 13 had excellent hot water solubility and engaging force equivalent to those of Example 1, and the surface stickiness was not felt at all as in Example 1 except for Example 10, and were excellent in terms of ease of use. The hot water-soluble male-type hook-and-loop fastener of Example 10 had a slight surface stickiness, but the stickiness was such that it did not cause a problem in use. Further, even when used for applications in contact with the skin, the hot water-soluble male-type hook-and-loop fastener of Example 11 was slightly inferior in flexibility, but the hot water-soluble male-type hook-and-loop fasteners of other Examples were all flexible and gentle.

Even when the male-type molded hook-and-loop fastener of these Examples was used as a fixture of disposable diapers, the hook-and-loop fastener did not dissolve due to urine during wearing, and there was no problem in use. Then, the disposable diaper having the male-type molded hook-and-loop fastener attached thereto was folded into a round shape, and in this state, the folded state was fixed using the hot water-soluble male-type molded hook-and-loop fastener attached to the disposable diaper (the engaging counterpart was a nonwoven fabric having a surface loop used in the disposable diaper). Then, when the disposable diaper in this state was immersed in stirred hot water of 80°C, the male-type molded hook-and-loop fastener was immediately dissolved and disappeared, and the disposable diaper was unfolded from the folded state, so that the disposable diaper was in a state of being easily treated (beaten and recycling) thereafter. Further, none of the hook-and-loop fasteners of these examples dissolved in water at a water temperature of lower than 50°C.

Reference Signs List

1: Male-type engaging element
2: Substrate
T: Row direction of male-type engaging elements

**Claims**

1.  A hot water-soluble male-type hook-and-loop fastener comprising a substrate and a plurality of male-type engaging elements protruding from the surface of the substrate, wherein the substrate and the male-type engaging elements both contain a polyvinyl alcohol-based resin, and the substrate and the male-type engaging elements are both soluble in hot water at a water temperature of 45 to 90°C but are not soluble in water at a water temperature of lower than 45°C.

2.  The hot water-soluble male-type hook-and-loop fastener according to claim 1, wherein the plurality of male-type engaging elements are arranged in a row, and each of the male-type engaging elements has a shape rising from the surface of the substrate, bending in the row direction from the middle thereof, and having a tip end portion facing a direction approaching the surface of the substrate, or a shape rising from the surface of the substrate, bending in the row direction by being divided into front and back in the row direction in the middle, thereof and having divided tip end portions facing a direction approaching the surface of the substrate.

3.  The hot water-soluble male-type hook-and-loop fastener according to claim 1 or 2, wherein both the substrate and the male-type engaging elements are made of the polyvinyl alcohol-based resin having a polymerization degree in a range of 300 to 700 and a saponification degree in a range of 80 to 99 mol%.

4.  The hot water-soluble male-type hook-and-loop fastener according to any one of claims 1 to 3, wherein the substrate and the male-type engaging elements are made of a resin composition in which a polyhydric alcohol or an ethylene oxide-based polymer is added to the polyvinyl alcohol-based resin in an amount of 5 to 45 parts by mass with respect to 100 parts by mass of the polyvinyl alcohol-based resin.

5.  The hot water-soluble male-type hook-and-loop fastener according to any one of claims 1 to 4, wherein the substrate and the male-type engaging elements are made of a resin composition in which layered inorganic particles are added to the polyvinyl alcohol-based resin in an amount of 4 to 25 parts by mass with respect to 100 parts by mass of the polyvinyl alcohol-based resin.

6.  The hot water-soluble male-type hook-and-loop fastener according to claim 2, wherein the height from the surface of the substrate to the top portion of each of the male-type engaging elements is 1.2 mm or less when each of the male-type engaging elements has a shape rising from the surface of the substrate, bending in the row direction from a middle portion thereof, and having a tip end portion facing a direction approaching the surface of the substrate, and wherein the height from the surface of the substrate to the top portion of each of the male-type engaging elements is 0.6 mm or less when each of the male-type engaging elements has a shape rising from the surface of the substrate, bending in the row direction by being divided into front and back in the row direction, and having divided tip end portions facing a direction approaching the surface of the substrate.

7.  The hot water-soluble male-type hook-and-loop fastener according to claim 4, wherein the polyhydric alcohol or the ethylene oxide-based polymer is polyethylene glycol, and has a number-average molecular weight in a range of 300 to 700.

8.  The hot water-soluble male-type hook-and-loop fastener according to claim 5, wherein the layered inorganic particles are talc.

9.  A combination of the hot water-soluble male-type hook-and-loop fastener according to any one of claims 1-8 and a hot water-soluble loop type hook-and-loop fastener composed of a loop fiber containing a polyvinyl alcohol-based resin that is soluble in hot water at a water temperature of 45 to 90°C but is not soluble in water at a water temperature of lower than 45°C.

10. The combination according to claim 9, wherein the hot water-soluble loop type hook-and-loop fastener has a nonwoven fabric or a woven or knitted fabric as a base fabric, and loop fibers are present on the surfaces of the base fabric.

11. A method for producing a hot water-soluble male-type hook-and-loop fastener, comprising the steps of: pouring a molten material of a resin composition satisfying the following (1) and (2) onto the surface of a metal roll satisfying the following (A), press-fitting the molten material into a cavity in the shape of a male-type engaging element formed by perforating the surface of the metal roll, cooling and solidifying the molten material in this state, and then peeling the molten material from the surface of the metal roll and withdrawing the molten material from the cavity:

(A) the metal roll is formed by superposing ring-shaped dies in which a plurality of the cavities are engraved on the outer circumference, a plurality of the cavities are arranged in a row in the circumferential direction of the metal roll on the surface of the metal roll, and the cavities are bent in the row direction of the cavities in the middle and the tip end portions thereof approach the surface of the metal roll, or the cavities are bifurcated in the middle and bent in the row direction respectively and the tip end portions thereof approach the surface of the metal roll;

(1) the resin composition contains a polyvinyl alcohol-based resin, a polyhydric alcohol or an ethylene oxide-based polymer, and layered inorganic particles, wherein a mixing ratio of the resin composition is such that the polyhydric alcohol or the ethylene oxide-based polymer is in a range of 5 to 45 parts by mass and the layered inorganic particles are in a range of 4 to 25 parts by mass with respect to 100 parts by mass of the polyvinyl alcohol-based resin;

(2) the polyvinyl alcohol-based resin has a polymerization degree of 300 to 700 and a saponification degree of 80 to 99 mol%.

12. The method for producing a hot water-soluble male-type hook-and-loop fastener according to claim 11, wherein when the cavity has a shape in which the cavity is bent in the row direction of the cavity in the middle and the tip end portion thereof is approaching the surface of the metal roll, the depth of the cavity from the surface of the metal roll is 1.2 mm or less at the deepest portion, or when the cavity has a shape in which the cavity is bifurcated and bent in the row direction in the middle and the tip end portions thereof are approaching the surface of the metal roll, the depth of the cavity from the surface of the metal roll is 0.6 mm or less at the deepest portion.

13. A disposable diaper or sanitary product to which the hot water-soluble male-type hook-and-loop fastener according to any one of claims 1 to 8 is attached.

[Fig. 1]

[Fig. 2]

[Fig. 3]

## INTERNATIONAL SEARCH REPORT

| International application No. |
|---|
| **PCT/JP2022/025031** |

**A. CLASSIFICATION OF SUBJECT MATTER**

*A44B 18/00*(2006.01)i; *C08K 5/053*(2006.01)i; *C08L 29/04*(2006.01)i; *C08L 71/02*(2006.01)i; *C08K 3/013*(2018.01)i; *C08K 3/34*(2006.01)i

FI: A44B18/00; C08L29/04 Z; C08K5/053; C08L71/02; C08K3/013; C08K3/34

According to International Patent Classification (IPC) or to both national classification and IPC

**B. FIELDS SEARCHED**

Minimum documentation searched (classification system followed by classification symbols)

A44B18/00; C08K5/053; C08L29/04; C08L71/02; C08K3/013; C08K3/34

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 9-313218 A (YKK CORP) 09 December 1997 (1997-12-09) paragraphs [0005], [0007]-[0027], fig. 1-8 | 1-13 |
| Y | JP 6-220287 A (KURARAY CO LTD) 09 August 1994 (1994-08-09) paragraphs [0002], [0005], [0008]-[0009] | 1-13 |
| Y | WO 2019/159756 A1 (KURARAY CO LTD) 22 August 2019 (2019-08-22) paragraphs [0042]-[0045] | 1-13 |
| Y | JP 11-181306 A (YKK CORP) 06 July 1999 (1999-07-06) paragraphs [0012]-[0016], fig. 7-17 | 1-13 |

☐ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 August 2022** | **30 August 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2022/025031**

| Patent document cited in search report | | | Publication date (day/month/year) | Patent family member(s) | | | Publication date (day/month/year) |
|---|---|---|---|---|---|---|---|
| JP | 9-313218 | A | 09 December 1997 | US column 2, line 66 to column 10, line 8, fig. 1-8 | 5985406 | A | |
| | | | | EP | 809952 | A2 | |
| | | | | CN | 1167595 | A | |
| JP | 6-220287 | A | 09 August 1994 | (Family: none) | | | |
| WO | 2019/159756 | A1 | 22 August 2019 | TW | 201936658 | A | |
| JP | 11-181306 | A | 06 July 1999 | US paragraphs [0039]-[0104], fig. 10-20 | 2001/0003761 | A1 | |
| | | | | GB | 2332204 | A | |
| | | | | DE | 19857067 | A1 | |
| | | | | CN | 1224737 | A | |

Form PCT/ISA/210 (patent family annex) (January 2015)

**EP 4 364 606 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9313218 A